# EUROPEAN PATENT APPLICATION

(11) **EP 4 564 635 A1**
(43) Date of publication of application: **04.06.2025**
(21) Application number: 23212894.2
(22) Date of filing: 29.11.2023
(51) Int. Cl.: H02J 3/32, H02J 7/02, H02M 7/483, H02M 7/5388

(54) **A CONVERTER ARRANGEMENT FOR CONNECTION TO AN ALTERNATING CURRENT POWER GRID AND A POWER SYSTEM**

(71) Applicant: Hitachi Energy Ltd, 8050 Zürich (CH)
(72) Inventor: Chou, Shih-Feng, 723 42 Västerås (SE); Bai, Haofeng, 723 48 Västerås (SE); Chen, Nan, 722 10 Västerås (SE); Svensson, Jan, 723 46 Västerås (SE)
(74) Representative: AWA Sweden AB

(57) **Abstract**

There is disclosed herein a converter arrangement (1), configured to be connected to an AC power grid (2), comprising a first MMC unit (10) comprising an upper arm (12) for each phase of the AC power grid and a lower arm (14) connected between a first phase (2a) of the AC power grid and a lower terminal (40). The upper arms are connected to a first upper terminal (16) having a first voltage. The converter arrangement further comprises a second MMC unit (20) comprising an upper arm (22) for each phase of the AC power grid and a lower arm (24) connected between a second phase (2b) of the AC power grid and the lower terminal. The upper arms are connected to a second upper terminal (26) having a second voltage. The first voltage is different from the second voltage. There is also disclosed herein a power system (100).

## Description

### Technical field

The present disclosure generally relates to a converter arrangement configured to be connected to an alternating current, AC, power grid. The present disclosure further relates to a power system.

### Background

Renewable energy sources, such as wind and solar power, offer significant environmental benefits by reducing greenhouse gas emissions and dependence on fossil fuels. However, one of their primary limitations is their intermittent nature. The availability of wind and sunlight varies throughout the day and across seasons, making it challenging to rely solely on renewables for a consistent and reliable energy supply. To address this issue, the demand to connect energy storage systems to the AC power grid have increased.

Converters are frequently used to connect energy storage systems to the power grid. Different types of energy storage systems provide different functionalities to the power grid. For example, super capacitors may provide quick bursts of energy while batteries are better at storing large amounts of energy. Therefore, different types of energy storage systems often require different converters to accommodate to their unique characteristics. The choice of converter depends on factors such as the energy storage technology used, the required voltage levels, and the specific application.

Modular multilevel converters, MMCs, can be used for connecting energy storage systems to the power grid. MMC with energy storage can provide grid services more efficiently. However, there is a demand for even more flexible converter arrangement and there is also a need of improved systems which may provide a greater variety of grid stability services.

### Summary

It is therefore an object of the present disclosure to provide a converter arrangement configured to be connected to an alternating current, AC, power grid that alleviates at least part of the above-mentioned drawbacks. It is for example an object of the present disclosure to provide a converter arrangement that provides a greater flexibility for connecting energy storage systems. Further, it is an object of the present disclosure to provide a power system that may provide multiple grid supporting functions.

According to a first aspect of the present disclosure, a converter arrangement configured to be connected to an alternating current, AC, power grid having a plurality of phases is provided. The converter arrangement comprises a first modular multilevel converter, MMC, unit comprising an upper arm for each phase of the AC power grid. Each of said upper arms of the first MMC unit is configured to connect a respective phase of the AC power grid to a first upper terminal having a first voltage. The first MMC unit further comprises a lower arm configured to be connected between a first phase of the AC power grid and a lower terminal. The converter arrangement further comprises a second MMC unit comprising an upper arm for each phase of the AC power grid. Each of said upper arms of the second MMC unit is configured to connect a respective phase of the AC power grid to a second upper terminal having a second voltage. The second MMC unit further comprises a lower arm configured to be connected between a second phase of the AC power grid and the lower terminal. The first voltage is different from the second voltage.

Usually, an MMC connects all phases of the AC power grid to the upper terminal and to the lower terminal and thereby connect a specific type of grid-supporting component (connected between the DC terminals of the MMC) to the AC power grid. Various types of grid-supporting components excel in specific functions related to grid stability. The AC power grid is a complex system that can experience a wide range of issues, each necessitating a unique response from the grid-supporting components. As a result, a single grid-supporting component is rarely sufficient to address all potential stability problems. Often, the different types of grid-supporting functions are performed by components operating at different voltage levels. In the present inventive concept, the converter arrangement includes at least two MMC units, the first MMC unit and the second MMC unit, thereby providing a first upper terminal and a second upper terminal. This enables the converter arrangement to have different voltage levels at each of the upper terminals. Accordingly, the present inventive concept allows for the connection of at least two different (grid-supporting) components, with different voltage requirements, to the AC power grid. This is advantageous as it allows one converter arrangement to connect a plurality of different grid supporting components to the AC power grid such that different grid supporting functions may be provided. The first and second upper terminals of the first and second MMC unit are separated from each other. The first and second MMC unit shares the same lower terminal. The lower terminal may also be seen as a neutral point. With this configuration, the voltage difference between the first upper terminal and the lower terminal may be different from the voltage difference of the second upper terminal and the lower terminal.

The first voltage may be adapted for connection of a first type of energy storage module between the first upper terminal and the lower terminal and the second voltage may be adapted for connection of a second type of energy storage module between the second upper terminal and the lower terminal. As an example, the voltages may be adapted for different types of energy storage modules. Energy storage modules are examples of grid-supporting components where different types of energy storage modules excel at different kinds of grid-supporting functions and operate at different voltage levels. By adapting the first and second voltages to the respective energy storage modules, the converter arrangement allows for connection of two different types of energy storage modules.

Each of the upper arms of the first MMC unit may comprise a first number of converter cells and each of the upper arms of the second MMC unit may comprise a second number of converter cells. The first number of converter cells and the second number of converter cells may be different.

Each converter cell provides a fraction of the overall voltage across an upper arm of a MMC unit. With fewer converter cells, a lower overall voltage may be achieved while, by adding more converter cells, a higher overall voltage may be achieved. Accordingly, using different number of converter cells, the first MMC unit and the second MMC unit can provide different voltages to the first upper terminal and the second upper terminal. In this configuration, the converter cells may be of the same, or approximately the same, rating. It is convenient to use the same type of converter cells as this streamlines the components of the converter arrangement, which may be advantageous during maintenance.

In another variant, each of the upper arms of the first MMC unit and the second MMC unit may comprise the same number of converter cells and a voltage rating of the converter cells of the upper arms of the first MMC unit may be different from a voltage rating of the converter cells of the upper arms of the second MMC unit.

By using different types of converter cells with different voltage ratings, the same number of converter cells in the upper arms may be used for each MMC unit. This is a further way of providing the different voltages at the first and second upper terminals. It may be advantageous to use the same number of converter cells as it allows the upper terminals to have similar design.

The converter arrangement may further comprise a third MMC unit comprising an upper arm for each phase of the AC power grid. Each of the upper arms of the third MMC unit may be configured to connect a respective phase of the AC power grid to a third upper terminal having a third voltage. The third MMC unit may further comprise a lower arm configured to be connected between a third phase of the AC power grid and the lower terminal. The third voltage may be different from the first voltage and the second voltage.

A third MMC unit may allow for connection of at least one additional type of grid-supporting component to the AC power grid. Further, an AC power grid generally comprises three phases. Using three MMC units as defined herein is therefore suitable for connection of the lower terminal to each phase.

The third voltage may be adapted for connection of a third type of energy storage module between the third upper terminal and the lower terminal. Thereby, a third energy storage module may be connected to the AC power grid through the converter arrangement.

It should be noted that the converter arrangement may further comprise additional MMC units to allow connection of further components, such as an additional energy storage, to the AC power grid.

Each of the upper arms of the third MMC unit comprises a third number of converter cells that may be different from the respective number of converter cells in the first MMC unit and the second MMC unit (for example provided that the voltage ratings of the converter cells in the first MMC unit and the second MMC unit are the same or approximately the same) and/or wherein a voltage rating of the converter cells of the upper arms of the third MMC unit may be different from a voltage rating of the converter cells of the upper arms of the first MMC unit and the second MMC unit (for example provided that the number of converter cells in the each of the upper arms of the first, second and third MMC units are the same). This provides design alternatives to the third MMC unit with similar advantages as discussed above.

Each of the lower arms may comprise a plurality of converter cell strings connected in parallel, and each converter cell string may comprise a plurality of converter cells connected in series.

When only one lower arm is used for each phase, the lower arms may need to handle the current from all the components connected between each upper terminal and the lower terminal. In an occasion where more than one of the components are used at the same time, the current in the lower arms will be higher than in the upper arms. In other words, the lower arms may need to conduct all the current from all the upper arms. However, generally all components are not activated at the same time. One way of handling this situation is provided above, where converter cells are connected in series in a plurality of converter cell strings. However, it should be noted that this may also be handled by using converter cells with higher current rating and thereby only have a lower number of converter cell strings.

According to a second aspect of the present disclosure, a power system is provided. The power system comprises a converter arrangement according to the first aspect. The power system further comprises a first type of energy storage module connected between the first upper terminal and the lower terminal, a second type of energy storage module connected between the second upper terminal and the lower terminal, and on a condition that the converter arrangement includes a third MMC unit, a third type of energy storage module connected between the third upper terminal and the lower terminal. The first type of energy storage module, the second type of energy storage module and the third type of energy storage module are different from each other.

With the respective energy storage modules, the power system is allowed to provide grid-supporting functions to the AC power grid. Energy storage modules can capture excess energy from the AC power grid during surplus periods and subsequently release stored energy to compensate for deficits in the AC power grid's power supply. Further, with different types of energy storage modules, the power system may have one energy storage module, having high energy density, that provides energy storage capacity with the possibility to feed the AC power grid with energy. Another energy storage module, having high power density, may provide quick bursts of energy, thereby providing stability to the AC power grid. Therefore, a more flexible power system is provided.

The first type of energy storage module may be a supercapacitor module, the second type of energy storage module may be a battery module, and the third type of energy storage module may be an electrolyser module.

Electrolyser modules and battery modules generally have a high energy density with a lower power density and are therefore able to provide energy over longer period of times while supercapacitor modules have a high power density and a lower energy density and are therefore able to provide quick bursts of energy. The supercapacitor module may for example provide inertia response, the battery modules may provide frequency response and the hydrogen production may be used for balancing renewable intermittent electricity production. Accordingly, the power system is able to provide multiple grid-supporting functionalities and a flexible power system is achieved.

At least one of the first, second, and third, type of energy storage modules may comprise a plurality of energy storage strings connected in parallel between the lower terminal and the respective upper terminal of said at least one of the first, second, and third, type of energy storage modules. Each of said plurality of energy storage strings may comprise a plurality of energy storage units connected in series.

Adding energy storage strings in parallel increases the energy storage capacity, while adding energy storage units in series increases the voltage capacity. The choice of whether to add energy storage strings in parallel or energy storage units in series depends on the specific requirements of the application and the desired balance between energy storage and voltage levels. Therefore, each energy storage module may be adapted to different situations and thereby the flexibility of the power system is further increased.

Each energy storage string may further comprise a fractional converter connected in series to the plurality of energy storage units and configured to balance the power between the plurality of energy storage strings of the energy storage module.

The fractional converter allows for a precise control of the voltage and the frequency. Furthermore, the series-connected fractional converters can also be used to actively balance the power between the energy storage strings. This also allows the energy storage module to contribute with an improved, preferably maximized, capacity utilization as there is a balance on the state of charge between each energy storage string. Balancing may further ensure that each energy storage string operates at an optimal state of charge, which may result in a better overall system performance. Energy storage strings in balance also allows for the energy storage module to scale up or down with less risk of disrupting the performance and stability of the energy storage system.

The power system may further comprise a control unit configured to control activation of the first type, second type, and if present third type, of energy storage module.

The control unit allows for control of the operation of each energy storage module such that energy storage modules are operated at the correct occasion and such that the current and voltage provided by the converter arrangement are optimal for each respective energy storage module.

Activation of the first type, second type, and if present third type, of energy storage modules may be based on at least one parameter of the AC power grid. By connecting the activation of the respective energy storage module to at least one parameter of the AC power grid, the power system may be able to provide a quick response to different stability issues in the power grid. The parameter may for example be the power balance in the AC power grid, the frequency, or the voltage of the AC power grid. However, different parameters may also be used for each respective energy storage module, or a combination of parameters may be used. As an example, the power balance may be used to control hydrogen production and the frequency to control the battery modules and supercapacitor module.

Effects and features of the second aspect may be largely analogous to those described above in connection with the first aspect. Embodiments mentioned in relation to the first aspect may be at least largely compatible with the second aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular component parts of the arrangement and system described may vary. It is also to be understood that the terminology used herein is for the purpose of describing particular embodiments only, and it is not intended to be limiting.

### Brief description of the drawings

The present disclosure will by way of example be described in more detail with reference to the appended drawings, which show example embodiments of the disclosure.
- Fig. 1: illustrates a first configuration of a converter arrangement.
- Fig. 2: illustrates a second configuration of a converter arrangement.
- Fig. 3: illustrates a power system with energy storage modules.
- Fig. 4: illustrates a power system with a supercapacitor module, a battery module, and an electrolyser module.

### Detailed description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

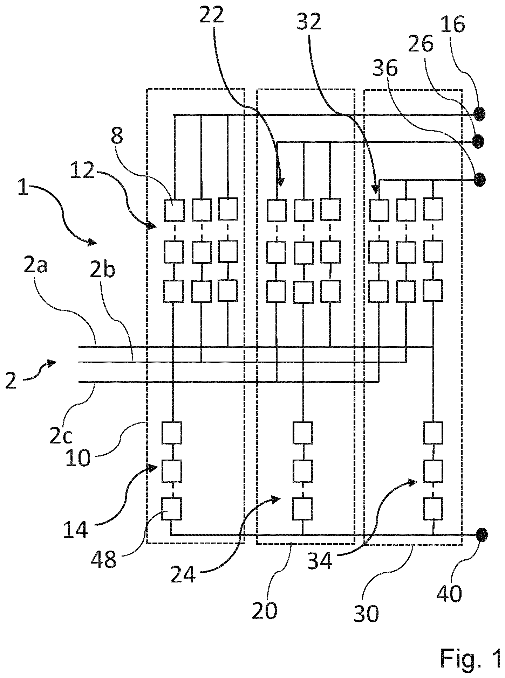

In Fig. 1, a first example of a converter arrangement 1 is illustrated. The converter arrangement 1 is connected to an alternating current, AC, power grid 2. The AC power grid 2 comprises three phases 2a-c. The converter arrangement 1 comprises a first modular multilevel converter, MMC, unit 10 that comprises an upper arm 12 for each phase 2a-c. Each upper arm 12 connects the respective phase 2a-c to a first upper terminal 16, thereby providing the first upper terminal 16 with a first voltage. The first MMC unit 10 further comprises a lower arm 14 configured to be connected between a first phase 2a of the AC power grid 2 and a lower terminal 40, thereby achieving a first voltage difference between the first upper terminal 12 and the lower terminal 40.

The converter arrangement 1 further comprises a second MMC unit 20 that comprises an upper arm 22 for each phase 2a-c. Each upper arm 22 connects the respective phase 2a-c to a second upper terminal 26, thereby providing the second upper terminal 26 with a second voltage. The second MMC unit 20 further comprises a lower arm 24 configured to be connected between a second phase 2b of the AC power grid 2 and the lower terminal 40, thereby achieving a second voltage difference between the second upper terminal 22 and the lower terminal 40.

In the example of Fig. 1, the converter arrangement 1 further comprises a third MMC unit 30 that comprises an upper arm 32 for each phase 2a-c. Each upper arm 32 connects the respective phase 2a-c to a third upper terminal 36, thereby providing the third upper terminal 36 with a third voltage. The third MMC unit 30 further comprises a lower arm 34 configured to be connected between a third phase 2c of the AC power grid 2 and the lower terminal 40, thereby achieving a third voltage difference between the third upper terminal 32 and the lower terminal 40. This allows the operator, or a control unit to adapt the voltage difference between the respective upper terminal 16, 26, 36 and the lower terminal 40 such that the voltage difference is adapted to the component arranged between the respective upper terminal 16, 26, 36 and the lower terminal 40.

Each of the upper arms 12, 22, 32 of the first MMC unit 10, the second MMC unit 20 and the third MMC unit 30 comprises the same number of converter cells 8. However, the converter cells 8 of the upper arms 12 of the first MMC unit 10, of the upper arms 22 of the second MMC unit 20 and of the upper arms 32 of the third MMC unit 30 have different voltage rating from each other and thereby the first voltage, the second voltage and the third voltage are different from each other.

As may be seen in Fig. 1, each MMC unit 10, 20, 30 connects to different upper terminals 16, 26, 36 with the upper arms 12, 22, 32 of each MMC unit 10, 20, 30. Further, each MMC unit 10, 20, 30 connects to the same lower terminal 40 with the lower arms 14, 24, 34. This results in that each lower arm 14, 24, 34 may need to handle the current from all the components connected between the respective upper terminals 12, 22, 32 and the lower terminal 40. In an occasion where more than one of the components are used at the same time, the current in the lower arms 14, 24, 34 will be higher than in the upper arms 12, 22, 32. However, it should be noted that generally all components are not activated at the same time. Therefore, each lower arm 14, 24, 34 is provided with converter cells 48 connected in series. The converter cells 48 of the lower arms 14, 24, 34 may therefore have a higher current rating than the converter cells 8 of the upper arms 12, 22, 32 to be able to handle this potentially higher current.

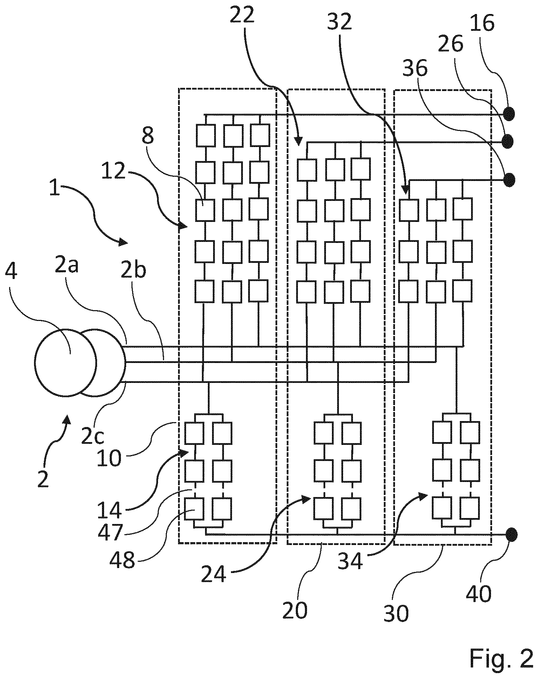

Turning to Fig. 2, a second example of the converter arrangement 1 is provided. The converter arrangement 1 comprises three MMC units 10, 20, 30 with upper arms 12, 22, 32 connecting each phase 2a-c of the AC power grid 2 to a respective upper terminal 16, 26, 36. Each MMC unit 10, 20, 30 further comprises lower arms 14, 24, 34 connecting a respective phase 2a-c to a lower terminal 40. The converter arrangement 1 is connected to the AC power grid 2 via a transformer 4. In Fig. 2, the converter cells 8 of the respective upper arms 12, 22, 32 have the same voltage rating. To achieve the difference between the first voltage, the second voltage and the third voltage, the upper arms 12, 22, 32 are provided with different numbers of converter cells 8 connected in series. The upper arms 12 of the first MMC unit 10 are provided with a first number of converter cells 8, i.e., five converter cells 8. The upper arms 22 of the second MMC unit 20 are provided with a second number of converter cells 8, i.e., four converter cells 8. The upper arms 32 of the third MMC unit 30 are provided with a third number of converter cells 8, i.e., three converter cells 8. Each converter cell 8 provides a fraction of the overall voltage of an upper arm and by having fewer converter cells 8 a lower overall voltage is achieved and by adding more converter cells 8 a higher overall voltage is achieved. Thereby, the first MMC unit 10, the second MMC unit 20 and the third MMC unit 30 will provide different voltages to the first upper terminal 16, the second upper terminal 26 and the third upper terminal 36, respectively.

Each of the lower arms 14, 24, 34 of each MMC unit 10, 20, 30 comprises a plurality of converter cell strings 47. The converter cell strings 47 of each lower arm 14, 24, 34 are connected in parallel to each other. In each converter cell string 47, there is a plurality of converter cells 48 connected in series. Accordingly, the current rating of the lower arms 14, 24, 34 may be designed to handle the current from all potential components between each respective upper terminal 16, 26, 36 and the lower terminal 40.

Fig. 1 and 2 illustrate two possible configurations for achieving different voltages at each upper terminal 16, 26, 36. These configurations may be combined with each other or with other configurations for designing the voltage rating and the current rating of the upper arms 12, 22, 32 and the lower arms 14, 24, 34.

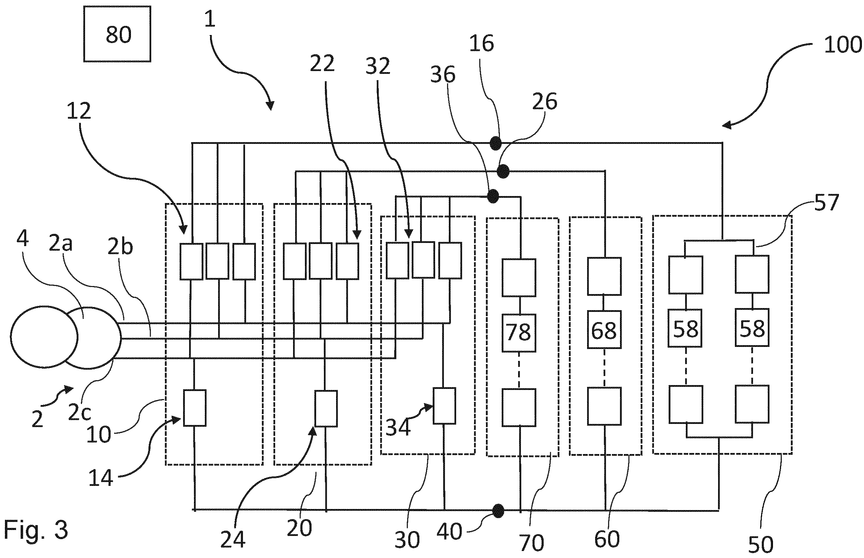

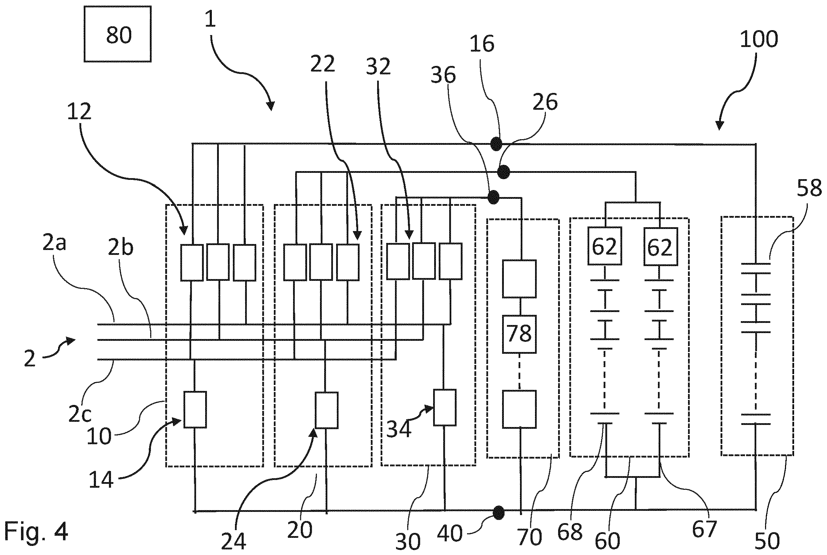

Further, various types of grid-supporting components excel in specific functions related to grid stability. As a result, a single grid-supporting component is rarely sufficient to address all potential stability problems. Usually, each converter arrangement connects a single or specific component to the AC power grid 2. However, with a converter arrangement 1 as described with reference to either one of Figs. 1 or 2, a plurality of components operating at different voltage levels may be connected to the AC power grid 2. Turning to Fig. 3 and 4, examples of how the converter arrangement 1 may be used are described.

In Fig. 3, a power system 100 is illustrated. The power system 100 comprises a converter arrangement 1 as described in either Fig. 1 or 2. The converter arrangement 1 with the upper arms 12, 22, 32 and lower arms 14, 24, 34 of the respective MMC units 10, 20, 30 connects the upper terminals 16, 26, 36 and the lower terminal 40 to an AC power grid 2 through a transformer 4. The transformer 4 may provide galvanic insulation for the power system 100.

The power system 100 further comprises a first type of energy storage module 50 connected between the first upper terminal 16 and the lower terminal 40, a second type of energy storage module 60 connected between the second upper terminal 26 and the lower terminal 40, and a third type of energy storage module 70 connected between the third upper terminal 36 and the lower terminal 40. The first type of energy storage module 50, the second type of energy storage module 60 and the third type of energy storage module 70 operate at different voltage levels. The respective voltage of each upper terminal 16, 26, 36 is therefore adapted to each energy storage module 50, 60, 70.

The first type of energy storage module 50 comprises a plurality of energy storage strings 57 connected in parallel between the lower terminal 40 and the first upper terminal 16. Each of said plurality of energy storage strings 57 comprises a plurality of energy storage units 58 connected in series. The second type of energy storage module 60 and the third type of energy storage module each comprises a plurality of energy storage units 68, 78 connected in series. It should be noted that any of the types of energy storage modules 58, 68, 78 may comprises energy storage strings in parallel and energy storage units in series in each energy storage string. Adding energy storage strings in parallel increases the energy storage capacity, while adding energy storage units in series increases the voltage capacity and the energy storage capacity. The choice of whether to add energy storage strings in parallel or energy storage units in series depends on the specific requirements of the application and the desired balance between energy storage and voltage levels.

The power system 100 further comprises a control unit 80 configured to control activation of the first type 50, the second type 60, and the third type 70, of energy storage modules. The activation of the first type 50, the second type 60, and the third type 70, of energy storage modules may be based on at least one parameter of the AC power grid 2. Some examples of parameters that may be used are grid frequency to guide energy storage device to inject power when frequency drops, undersupply, and absorb power when it rises, oversupply, thereby helping maintain grid stability. Voltage regulation may be used which involves energy storage modules providing or absorbing reactive power to control voltage levels, mitigate fluctuations, and enhance power quality. Further, the energy balance of the AC power grid 2 may be used as a parameter as well.

Turning to Fig. 4, a power system 100 comprising a similar converter arrangement 1 as in Fig. 1 or 2 is provided. A first type of energy storage module 50 is connected between the first upper terminal 16 and the lower terminal 40, a second type of energy storage module 60 is connected between the second upper terminal 26 and the lower terminal 40, and a third type of energy storage module 70 is connected between the third upper terminal 36 and the lower terminal 40. In Fig. 4, the first type of energy storage module 50 is a super capacitor module, the second type of energy storage module 60 is a battery module, and the third type of energy storage module 70 is an electrolyser module. The voltage at each upper terminal 16, 26, 36 are adapted to the respective type of energy storage module 50, 60, 70.

The control unit 80 is provided to control when each type of energy storage module 50, 60, 70 is activated. The supercapacitor module 50 may be used to provide inertia response. The battery modules 60 may be used to provide frequency response and the electrolysis module 70 may be used for balancing renewable intermittent electricity production. Generally, power intensive energy storage modules such as the supercapacitor module 50 requires higher voltage than energy intensive energy storages such as electrolysis modules 70.

The battery module 60 comprises two energy storage strings 67 connected in parallel. Each of the energy storage strings 67 comprises a plurality of serially connected battery units 68. In each energy storage string 67, there is provided a fractional converter 62 connected in series with the battery units 68. The series connected fractional converters 62 can be used to actively balance the power between the energy storage strings 67. It should be noted that this configuration with parallel connected energy storage strings and serially connected energy storage units may be used for the other types of energy storage modules as well.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims.

## Claims

1. A converter arrangement (1) configured to be connected to an alternating current, AC, power grid (2) having a plurality of phases (2a-c), the converter arrangement comprising:
a first modular multilevel converter, MMC, unit (10) comprising an upper arm (12) for each phase of the AC power grid, each of said upper arms of the first MMC unit being configured to connect a respective phase of the AC power grid to a first upper terminal (16) having a first voltage, wherein the first MMC unit further comprises a lower arm (14) configured to be connected between a first phase (2a) of the AC power grid and a lower terminal (40), and
a second MMC unit (20) comprising an upper arm (22) for each phase of the AC power grid, each of said upper arms of the second MMC unit being configured to connect a respective phase of the AC power grid to a second upper terminal (26) having a second voltage, wherein the second MMC unit further comprises a lower arm (24) configured to be connected between a second phase (2b) of the AC power grid and the lower terminal,
wherein the first voltage is different from the second voltage.

2. The converter arrangement according to claim 1, wherein each of the upper arms of the first MMC unit comprises a first number of converter cells (8) and each of the upper arms of the second MMC unit comprises a second number of converter cells (8),
wherein the first number of converter cells and the second number of converter cells are different.

3. The converter arrangement according to claim 1, wherein each of the upper arms of the first MMC unit and the second MMC unit comprises the same number of converter cells and wherein a voltage rating of the converter cells of the upper arms of the first MMC unit is different from a voltage rating of the converter cells of the upper arms of the second MMC unit.

4. The converter arrangement according to any one of the preceding claims, wherein the first voltage is adapted for connection of a first type of energy storage module (50) between the first upper terminal and the lower terminal and wherein the second voltage is adapted for connection of a second type of energy storage module (60) between the second upper terminal and the lower terminal.

5. The converter arrangement according to any one of the preceding claims, further comprising a third MMC unit (30) comprising an upper arm (32) for each phase of the AC power grid, each of said upper arms of the third MMC unit being configured to connect a respective phase of the AC power grid to a third upper terminal (36) having a third voltage, wherein the third MMC unit further comprises a lower arm (34) configured to be connected between a third phase of the AC power grid and the lower terminal, and
wherein the third voltage is different from the first voltage and the second voltage.

6. The converter arrangement according to claim 5, wherein the third voltage is adapted for connection of a third type of energy storage module (70) between the third upper terminal and the lower terminal.

7. The converter arrangement according to any one of claims 5-6, wherein each of the upper arms of the third MMC unit comprises a third number of converter cells (8) that is different from the respective number of converter cells in the first MMC unit and the second MMC unit and/or wherein a voltage rating of the converter cells of the upper arms of the third MMC unit is different from a voltage rating of the converter cells of the upper arms of the first MMC unit and the second MMC unit.

8. The converter arrangement according to any one of the preceding claims, wherein each of the lower arms comprises a plurality of converter cell strings (47) connected in parallel and wherein each converter cell string comprises a plurality of converter cells (48) connected in series.

9. A power system (100) comprising a converter arrangement (1) according to any one of the preceding claims, further comprising:
a first type of energy storage module (50) connected between the first upper terminal and the lower terminal,
a second type of energy storage module (60) connected between the second upper terminal and the lower terminal, and
on a condition that the converter arrangement includes a third MMC unit, a third type of energy storage module (70) connected between the third upper terminal and the lower terminal,
wherein the first type of energy storage module, the second type of energy storage module and the third type of energy storage module are different from each other.

10. The power system according to claim 9, wherein the first type of energy storage module is a supercapacitor module,
wherein the second type of energy storage module is a battery module, and
wherein the third type of energy storage module is an electrolyser module.

11. The power system according to claim 9, wherein at least one of the first, second, and third, type of energy storage modules comprises a plurality of energy storage strings (57) connected in parallel between the lower terminal and the respective upper terminal of said at least of the first, second, and third, type of energy storage modules, wherein each of said plurality of energy storage string comprises a plurality of energy storage units (58) connected in series.

12. The power system according to claim 11, wherein each energy storage string further comprises a fractional converter (62) connected in series to the plurality of energy storage units and configured to balance the power between said plurality of energy storage strings of the energy storage module.

13. The power system according to any one of claims 9-12, further comprising a control unit (80) configured to control activation of the first type, second type, and if present third type, of energy storage module.

14. The power system according to claim 13, wherein activation of the first type, second type, and if present third type, of energy storage modules is based on at least one parameter of the AC power grid.
